## Europäisches Patentamt
## European Patent Office
## Office européen des brevets

(19)

(11) Veröffentlichungsnummer : **0 103 566**
**B1**

(12)

# EUROPÄISCHE PATENTSCHRIFT

(45) Veröffentlichungstag der Patentschrift :
06.05.87

(51) Int. Cl.⁴ : **B 23 K 35/30**, E 01 B 7/10

(21) Anmeldenummer : 83890161.9

(22) Anmeldetag : 14.09.83

(54) Verfahren zur Herstellung eines Herzstückes, insbesondere Herzstückspitze, aus Stahl für Schienenkreuzungen oder -weichen.

(30) Priorität : 15.09.82 AT 3458/82

(43) Veröffentlichungstag der Anmeldung :
21.03.84 Patentblatt 84/12

(45) Bekanntmachung des Hinweises auf die Patenterteilung : 06.05.87 Patentblatt 87/19

(84) Benannte Vertragsstaaten :
CH DE FR IT LI

(56) Entgegenhaltungen :
CH-A- 554 419
DE-A- 1 408 578
DE-A- 2 042 488
FR-A- 2 333 610
GB-A- 785 808
US-A- 2 400 249
US-A- 2 802 755

(73) Patentinhaber : VOEST-ALPINE Aktiengesellschaft
Friedrichstrasse 4
A-1011 Wien (AT)

(72) Erfinder : Augustin, Hubert, Dipl.-Ing.
Hauptplatz 8
A-8700 Leoben (AT)
Erfinder : Lindner, Hannes, Dipl.-Ing.
Strassfeldgasse 7
A-8700 Leoben (AT)

(74) Vertreter : Haffner, Thomas M., Dr. et al
Patentanwaltskanzlei Dipl.-Ing. Adolf Kretschmer Dr.
Thomas M. Haffner Schottengasse 3a
A-1014 Wien (AT)

EP 0 103 566 B1

## Beschreibung

Die Erfindung bezieht sich auf ein Verfahren zur Herstellung von Schienenkreuzungen oder -weiche, bei welchen die Verschleißbereiche mit einer Auftragsschweißung versehen sind. Bei Schienenkreuzungen oder -weichen sind die Herzstücke insbesondere im Bereich des Radüberlaufes einem hohen Verschleiß ausgesetzt. Die Beanspruchung der Herzstückspitze nimmt dabei mit größeren Achslasten und vor allem mit der Erhöhung der Fahrgeschwindigkeiten unverhältnismäßig zu, so daß an der Spitze größere Deformationen auftreten können, die die Lebensdauer der Herzstücke beträchtlich herabsetzen.

Um die Schlagwirkung des Rades auf die Herzspitze zu vermeiden, sind Herzstücke mit beweglichen Flügelschienen bzw. mit beweglichen Spitzen bekannt. Durch das Anlegen der Spitze an die Flügelschiene bzw. das Anlegen der Flügelschiene an die Herzstückspitze wird eine nicht unterbrochene Fahrfläche geschaffen. Solche Herze erfordern jedoch besondere Umstellvorrichtungen und sind entsprechend kompliziert und teuer.

Weiters ist es bekannt, Herzstücke mit besonderen Werkstoffeigenschaften einzusetzen. Bekannte Werkstoffe mit besonders guten Verschleißeigenschaften und hoher Beanspruchbarkeit im Radüberlaufbereich sind Manganhartstahl sowie hochvergütete niedriglegierte Stähle. Diese Stähle müssen aber mit den anschließenden Herzstückteilen bzw. mit den Schienen gut verschweißt werden können, um im lückenlos verschweißten Gleis des modernen Oberbaues Verwendung zu finden. Die Verschweißung des Manganhartstahles und auch die von niedriglegierten vergüteten Herzstückspitzen mit den Schienenwerkstoffen erfordert jedoch wegen der eingeschränkten Schweißeignung dieser Stähle besondere Maßnahmen, die ebenfalls sehr aufwendig sind. Es ist auch bekannt, im Bereich des Radüberlaufes einen Verbundwerkstoff einzusetzen, wobei der verschleißfeste Teil im Radüberlauf durch Auftragsschweißung aufgebracht wird.

Bei allen diesen Ausführungen von Herzstücken sind im Radüberlaufbereich, also an der Flügelschiene und an der Herzstückspitze entweder derselbe Werkstoff, oder verschiedene Werkstoffe mit nicht sehr unterschiedlicher Festigkeit eingesetzt. Es hat sich aber überraschenderweise gezeigt, daß es bei Verwendung eines höchstverschleißbeständigen Werkstoffes für die Spitze allein genügt, die Flügelschiene auch im Radüberlauf in normaler Ausführung (im Walzzustand) zu belassen.

Aus der US-A 2 400 249 sind Schweißelektroden bekanntgeworden, welche in erster Linie für die Verbindung von Manganstahl, wie er beispielsweise für Herzstücke im Weichenbau Verwendung findet, geeignet sind. Die vorgeschlagenen Elektroden sollen bei der Verbindung von Manganstahlteilen miteinander die üblicherweise zu befürchtenden Probleme, insbesondere Rißbildung od. dgl. vermeiden. Als wesentlich für einen derartigen Elektrodenstahl wird ein Kupferanteil von bis zu 5 % angesehen, wodurch das Verschweißen von Manganstahlteilen miteinander wesentlich erleichtert wird.

Aus der GB-PS 785 808 sind eine Reihe austenitischer Stähle zu entnehmen, wobei eine Abstimmung zwischen den Gehalten an Chrom, Mangan, Nickel, Kohlenstoff und Stickstoff unter Berücksichtigung zusätzlicher Legierungselemente, wie Molybdän, Wolfram und/oder Palladium bzw. Niob vorgenommen wurde.

Aus der DE-OS 2 042 488 ist schließlich bereits prinzipiell zu entnehmen, daß Verschleißbereiche von Herzstücken mit einer Panzerung versehen werden. Im Rahmen dieses bekannten Verfahrens wird eine mittels Elektronenstrahlschweißung aufgebrachte Manganhartstahllegierung nicht näher präzisierter Zusammensetzung vorgeschlagen.

Aus der DE-OS 1 408 578 ist eine austenitische Manganstahl-Schweißelektrode mit einem Kern aus einem Stahl niedrigen Kohlenstoffgehalts und einem Überzug mit schlackenbildenden Bestandteilen bekanntgeworden, welche sich besonders zum Ablagern eines festen, zähen, unporösen, rissefreien austenitischen Manganstahls eignet, wobei diese Ablagerung neben Zähigkeit und Widerstandsfähigkeit besonders Wiedererhitzungsproblemen widerstehen soll. Die FR-PS 2 333 610 zeigt und beschreibt eine Elektrode zum Aufbringen einer Schicht auf Kohlenstoffstahl oder schwach legierten Stahl mittels Auftragsschweißung, um die Widerstandsfähigkeit von hohem Verschleiß ausgesetzten Teilen zu erhöhen.

Die Erfindung zielt nun darauf ab, ein Verfahren zur Herstellung höchstverschleißfester mit einer Auftragsschweißung versehener Verschleißbereiche von Schienenkreuzungen oder -weichen zu schaffen, bei welchem die erforderlichen Verschleißeigenschaften in einfacher Weise erzielt werden können. Zur Lösung dieser Aufgabe wird ein Verfahren der obengenannten Art vorgeschlagen, wobei im Radüberlaufbereich ausschließlich die Herzstückspitze mit einer Auftragsschweißung einer Stärke von etwa 15 mm mit einer austenitischen Elektrode mit der Zusammensetzung

C 0,1- 1,2 %
Si 0,1- 0,6 %
Mn 6,5-18 %
Cr 3,5-20 %
Ni 0 - 8 %

versehen wird und die Flügelschienen in normaler Ausführung im Walzzustand belassen werden. Eine derartige Elektrode gehört zum Typ der kaltverfestigenden Stähle wie beispielsweise Manganhartstahl. Herzstücke dieser Art haben sich im Versuchseinsatz bereits gut bewährt, wobei sich herausgestellt hat, daß der Radüberlaufteil der Flügelschiene aus naturhartem, nicht behandeltem Schienenstahl bestehen kann. Die Festigkeit der naturharten Schienenstähle liegt bei etwa 950 N/mm². Der Grundkörper eines derartigen Herzstückes kann hiebei aus üblichem Regelschienenstahl bestehen und kann daher ohne weiteres mit den Anschlußschienen beispielsweise stumpf verschweißt werden. Bei Verwendung derartiger Elektroden hat es sich herausgestellt, daß es genügt, wenn die Auftragsschweißung mit einer Stärke von etwa 15 mm vorgenommen wird.

**Patentanspruch**

Verfahren zur Herstellung von Schienenkreuzungen oder -weichen, bei welchen die Verschleißbereiche mit einer Auftragsschweißung versehen sind, wobei im Radüberlaufbereich ausschließlich die Herzstückspitze mit einer Auftragsschweißung einer Stärke von etwa 15 mm mit einer austenitischen Elektrode mit der Zusammensetzung

C  0,1- 1,2 %
Si  0,1- 0,6 %
Mn 6,5-18   %
Cr  3,5-20   %
Ni  0 - 8   %

versehen wird und die Flügelschienen in normaler Ausführung im Walzzustand belassen werden.

**Claim**

A process for manufacturing railway crossings or railway switches the wearing areas of which are provided with a hardfacing welding, whereat in the wheel roll-over area only the frog point is provided with a hardfacing welding having a thickness of about 15 mm by means of an austenitic electrode of the composition

C  0,1- 1,2 %
Si  0,1- 0,6 %
Mn 6,5-18   %
Cr  3,5-20   %
Ni  0 - 8   %

while the wing rails are left in normal structure as rolled.

**Revendication**

Procédé pour la fabrication de croisements de rails ou aiguillages, dans lequel les zones d'usure sont munies d'un soudage d'apport, étant précisé que dans la zone de franchissement des roues, seule la pointe du cœur est munie d'un soudage d'apport d'une épaisseur d'environ 15 mm avec une électrode austénitique de composition

C  0,1- 1,2 %
Si  0,1- 0,6 %
Mn 6,5-18   %
Cr  3,5-20   %
Ni  0 - 8   %

et que les pattes de lièvre sont réalisées en exécution normale à l'état laminé.